# EUROPEAN PATENT APPLICATION

(11) **EP 2 930 110 A1**
(43) Date of publication of application: **14.10.2015**
(21) Application number: 15162663.7
(22) Date of filing: 07.04.2015
(51) Int. Cl.: B64D 11/06, B64D 11/00, B60N 3/00

(54) **A SECURABLE FURNITURE ARRANGEMENT**

(30) Priority: 07.04.2014 GB 201406237
(71) Applicant: Zodiac Seats UK Limited, Cwmbran NP44 3HQ (GB)
(72) Inventor: Gow, Robert, Cwmbran, NP44 3HQ (GB); Morgan, Paul, Cwmbran, NP44 3HQ (GB)
(74) Representative: Teesdale, Emily Catherine

(57) **Abstract**

The present invention provides a securable furniture arrangement 100, 200 comprising a second furniture item 100, moveably mounted between a first position away from a first furniture item 200 to a second position nearer the first furniture item, and a securing mechanism to secure the second furniture item in the second position, the securing mechanism comprising a first magnetic element 205 and a first securing member 204 and a second securing member 136, moveably mounted between a deactivated position and an activated position, and comprising a second magnetic element 136, wherein, when the second furniture item is moved towards the second position, the second magnetic element is moved nearer the first magnetic element, causing, by means of the increased magnetic force, the second magnetic element to move the second securing member from the deactivated position to the activated position, thereby securing the second furniture item in the second position.

## Description

### Background of the Invention

The present invention concerns a securable furniture arrangement. More particularly, but not exclusively, this invention concerns a securable furniture arrangement comprising a first furniture item, a second furniture item, moveably mounted with respect to the first furniture item and moveable from a first position away from the first furniture item to a second position nearer the first furniture item, and a securing mechanism to secure the second furniture item in the second position. The invention also concerns an aircraft interior of an aircraft, an aircraft seat module comprising a securable furniture arrangement, an aircraft, a method of securing a securable furniture arrangement in an aircraft and a method of releasing a securable furniture arrangement in an aircraft.

Furniture items, such as tables and overhead stowage bin covers, on an aircraft are often secured by latches. Often, the latches have to be moved (by a passenger or member of cabin crew) to release the latch or secure the latch.

One example of a prior art latch is a biased latch often found on overhead stowage bin covers. Here, the latch in the bin cover is biased by a spring to a secured position so that when the bin cover is closed, the latch is retained in a slot to secure the cover. When the cover is to be opened, the latch is depressed (against the force of the spring) to release it.

A disadvantage of such an arrangement is that a relatively strong spring force is needed to adequately bias the latch to ensure the cover will not open by accident. Hence, releasing the latches requires a relatively strong force to depress the latch against the force of the spring. In addition, often the spring force has to be overcome to allow the latch to move back to spring into the slot. Another disadvantage of this arrangement is that the latch sticks out form the bin cover when the cover is open. This has the potential to catch on luggage, for example and cause injury.

The present invention seeks to mitigate the above-mentioned problems. Alternatively or additionally, the present invention seeks to provide an improved securable table arrangement.

### Summary of the Invention

The present invention provides, according to a first aspect, a securable furniture arrangement comprising a first furniture item, a second furniture item, moveably mounted with respect to the first furniture item and moveable from a first position away from the first furniture item to a second position nearer the first furniture item, and a securing mechanism to secure the second furniture item in the second position, the securing mechanism comprising a first magnetic element and a first securing member, both mounted to one of the first and second furniture items, a second securing member, moveably mounted to the other of the first and second furniture items, and moveable from a deactivated position with respect to that furniture item to an activated position with respect to that furniture item, wherein, the second securing member comprises a second magnetic element, and wherein at least one of the first and second magnetic elements is a magnet, and wherein, when the second furniture item is moved towards the second position, the second magnetic element is moved nearer the first magnetic element, causing, by means of the increased magnetic force, the second magnetic element to move the second securing member from the deactivated position to the activated position, and wherein, when the second securing member is in the activated position and the second furniture item is in the second position, the second securing member engages with the first securing member, thereby securing the second furniture item in the second position.

Such an arrangement allows the second furniture item to be secured near the first furniture item, without a user having to directly overcome a spring force, for example. Instead, all they need to do is move the second furniture item towards the first furniture item. It is then secured automatically. In addition, the force needed to release the latch is simply the magnetic force between the first magnetic element and the second magnetic element.

This arrangement is particular suitable for use on an aircraft, where it is important that items can be effectively secured so they do not release accidentally, whilst still be able to be easily and quickly secured and released, when desired. This applies to furniture items for passenger or crew use.

Preferably, the second securing member is restricted from moving further away from the activated position than the deactivated position and wherein, in the deactivated position, when the second furniture item is in the second position, the second securing member is sufficiently close to the first magnetic element to be moved by the magnetic force with the first magnetic element. This ensures that the second securing member will always move to the activated position when the second furniture item is moved to the second position. In other words, it ensures that the second furniture item can be secured.

Preferably, the first position of the second furniture item is a deployed position and the second position of the second furniture item is a stowed position.

Preferably, the first magnetic element and first securing member are both mounted to the first furniture item and the second securing member is mounted to the second furniture item.

Preferably, the second securing member is rotatably mounted to its furniture item. This allows the second securing member to be rotated in relation to the first securing member.

Preferably, the first and second magnetic elements are attracted to each other to move the second securing member towards the first securing member.

Preferably, the first and second securing members are corresponding female and male engagement members. For example, they could be a latch and latch slot.

Preferably, when the second securing member is in the activated position and the second furniture item is in the second position, the male securing member is engaged through the female securing member in a first direction and wherein relative movement between the male and female securing members would be in a substantially perpendicular direction to the first direction, were the second furniture item moved away from the second position. This means that if the second furniture item is urged to move to the first position (for example, due to gravity), there is not a strong force acting either on the male securing member or female securing member to disengage them, as the "disengagement" direction of the securing members is substantially perpendicular to the "urged" direction of the securing members. This means that the securing members could be held secured by a relatively weak force.

Preferably, the first securing member is the female engagement member and the second securing member is the male securing member.

Preferably, the second securing member is biased towards the deactivated position, preferably by a spring. This ensures that, unless the second furniture item is near the first furniture item, the second securing member is in the deactivated position and therefore, does not stick out from its furniture item. This reduces the risk of catching on things and causing injury. It also ensures that the second securing member is not moved up to the activated position until the second furniture item is near enough the first furniture item for the first and second securing members to correspond. For example, the second securing member would not stick out until the first and second securing members would be lined up to engage with each other. This prevents the second securing member incorrectly abutting against the first securing member (or any other part of its furniture item).

Preferably, the arrangement comprises a release member connected to the second securing member, the release member being movable to a released position to disengage the second securing member from the first securing member, against the force of the magnet, to enable the second furniture item to be moved from the second position. This allows for easy release of the second furniture item.

Preferably, the release member would also be biased with the force of the bias (for example, from a spring) of the second securing member towards the deactivated position, if present.

Preferably, when the release member is in the released position, the second securing member is in the deactivated position.

Preferably, the release member is depressed to move to the released position. This makes releasing easier as a pushing force is often easier to apply than a pulling force.

Preferably, the release member is mounted on the second furniture item and is provided with a finger hold to facilitate the movement of the second furniture item from the second position.

Preferably, the release member is a hinged lever.

Preferably, the first magnetic portion is a magnet.

The present invention provides, according to a second aspect, an aircraft interior of an aircraft comprising a securable furniture arrangement as described above, the securable furniture arrangement preferably comprising, as the first and second furniture elements, a stowage bin and lid, a galley fixture and galley, a door and a door frame or a stowable table and a mounting structure.

The present invention provides, according to a third aspect, an aircraft seat module comprising a securable furniture arrangement as described above, the securable furniture arrangement comprising, as the first and second furniture elements, a stowable table and a mounting structure of the module.

The present invention provides, according to a fourth aspect, an aircraft comprising the securable furniture arrangement, aircraft interior or aircraft seat module, as described above.

The present invention provides, according to a fifth aspect, a method of securing a securable furniture arrangement in an aircraft, the method comprising the steps of moving a second furniture item nearer to a first furniture item, thus causing a first magnetic element, mounted to one of the first and second furniture items, to move nearer to a second magnetic element, mounted to the other of the first and second furniture items, thus causing a second securing member comprising the second magnetic element to move to an activated position, thus causing the second securing member to engage with a first securing member, mounted to the same furniture item as the first magnetic element, thereby securing the second furniture item.
The present invention provides, according to a sixth aspect, a method of releasing a securable furniture arrangement in an aircraft, the method comprising the steps of moving a first magnetic element, mounted to one of a first or second furniture item, to move away from a second magnetic element, mounted to the other of the first and second furniture items, thus causing a second securing member comprising the second magnetic element to move to an deactivated position, thus causing the second securing member to disengage from a first securing member, mounted to the same furniture item as the first magnetic element, thereby releasing the second furniture item, and moving the second furniture item away from the first furniture item.

A second furniture item is described and claimed in UK patent application entitled "A Table Arrangement" with agent's reference "P022697GB ECT", having the same filing date as the present application. The contents of that application are fully incorporated herein by reference. The claims of the present application may incorporate any of the features disclosed in that patent application.

It will of course be appreciated that features described in relation to one aspect of the present invention may be incorporated into other aspects of the present invention. For example, the method of the invention may incorporate any of the features described with reference to the apparatus of the invention and *vice versa.*

### Description of the Drawings

Embodiments of the present invention will now be described by way of example only with reference to the accompanying schematic drawings of which:
- Figure 1a: shows a perspective view of a securable table arrangement according to a first embodiment of the invention, in a stowed, secured position with respect to a mounting frame.
- Figure 1b: shows a perspective view of part of the securable table arrangement of Figure 1a, showing internal features of the mounting frame;
- Figure 1c: shows a cut-away perspective view of part of Figure 1b;
- Figure 1d: shows a cut-away rear perspective view of part of Figure 1b;
- Figure 2a: shows a perspective view of part of the securable table arrangement of Figures 1a to 1d, with the release lever depressed;
- Figure 2b: shows a cut-away rear perspective view of part of Figure 2a, with the release lever depressed; and
- Figure 3: shows a perspective view of part of the securable table arrangement of Figures 1a to 1d and 2a to 2b, in a partially deployed position with respect to the mounting frame.

### Detailed Description

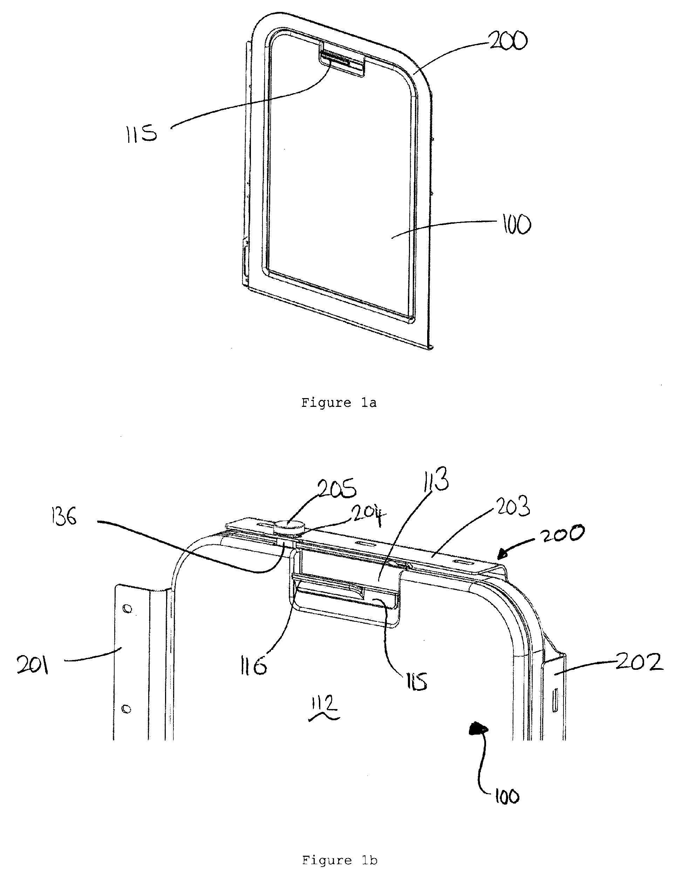

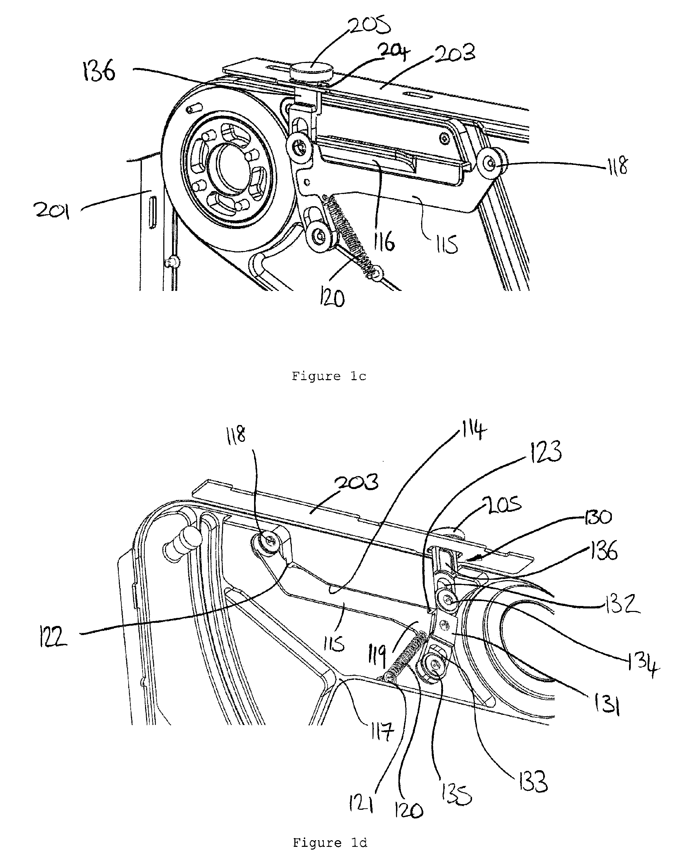

Figures 1a to 1d show various views of a table 100 in a stowed, secured vertical position within a mounting frame 200. The mounting frame 200 could be mounted on a seat console, for example.

The table 100 has a rear surface 112, which is visible while it is stowed. It also has an opposite top surface 111 (not visible when stowed). At the top of the rear surface 112 is an indent portion 113 with a hole 114 at the bottom. Through this indent portion, a release lever 115 extends. The lever 115 has an upturned finger hold 116 to aid a user in depressing the lever 115 (to release a latch - described later) and pulling the lever 115 (and therefore the table 100) downwards to a stowed position (also described later).

The mounting frame 200 provides internally facing side lips 201, 202 and an internally facing top lip 203, surrounding the table 100. The top lip 203 is provided with a circular magnet 205 towards a left hand side of the upper lip. The magnet 205 is located on top of the upper lip 203 so does not encroach on the space of the table 100. Adjacent and slightly in front of the magnet 205, the upper lip 203 is provided with a rectangular slot 204. The slot has rounded edges.

When stowed and secured, a rectangular protruding portion 136 of a latch arrangement 130 extends vertically from the table 100 into the rectangular slot 204 to secure the table 100 in the upright stowed position (as described later).

The lever 115 is pivotally mounted inside the table 100 by a lever hinge 118 at a proximal end. An elongate spring 120 is attached at a distal end 119 of the lever from one end, and at the other end is attached to an internal structure 117 of the table 100. The spring 120 is biased to pull the lever 115 down towards the internal structure (towards a released position).

Also at the distal end 119 of the lever 115, is mounted the latch arrangement 130. The latch arrangement 130 comprises a curved latch 131. The curved latch 131 has two elongate slots 132, 133 in it. Two corresponding "bumpers" 134, 135 are attached to the internal structure 117 of the table 100 and extend through the elongate slots 132, 133. Hence, the movement of the curved latch 131 is limited by the ends of the elongate slots 132, 133 abutting against the bumpers 134, 135.

In addition, the lever 115, when in the secured position, abuts against abutting portions 122, 123 of the bottom of the indent portion 113 of the table 100.

At a top end of the latch 131 is a rectangular protruding portion 136, which, when in the secured position, protrudes through the slot 204 to secure the table 100 in the stowed position.

Importantly, the latch 131 is magnetic and so is attracted to the magnet 205 on the upper lip 203 of the mounting frame 200.

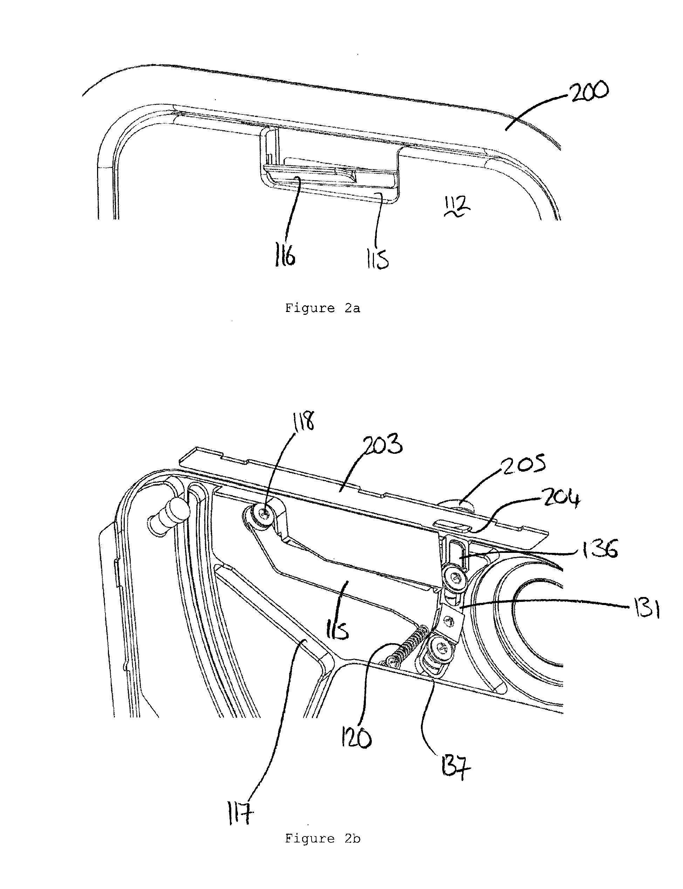

Figures 2a and 2b show views of the table 100 with the release lever 115 depressed (released position). In the depressed position, the lever 115 forces the latch 131 downwards to abut against abutting portion 137 of the internal structure 117 of the table 100. In addition, the top ends of the elongate slots 132, 133 abut against the bumpers 134, 135.

Importantly, in the released position, the rectangular protruding portion 136 no longer extends through the slot 204 of the upper lip 203 of the mounting frame 200. Instead, the latch 131 is located entirely within the table 100. Hence, the table 100 is no longer secured to the mounting frame 200. The table 100 can then be deployed.

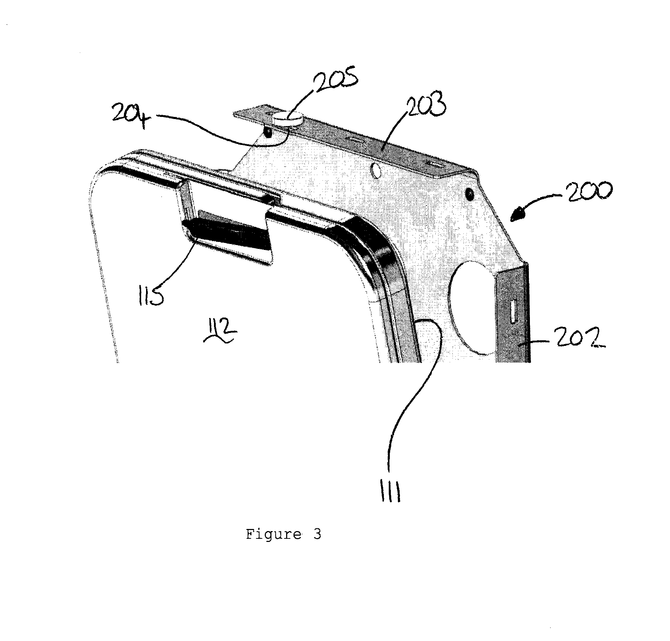

Figure 3 shows a perspective view of the table 100 in a partially deployed position with respect to the mounting frame 200. Here, the table 100 is pulled downwards by pulling down on the finger hold 116 of the lever 115 to rotate the table at its lower end.

In use, the table 100 is released from its stowed, secured position by first releasing the latch 131 and then deploying the table.

The latch 131 is released by depressing on the finger hold 116 of the lever 115. This acts against the magnetic attraction force between the magnet 205 of the mounting frame 200 and the latch 131 of the table 100 (and with the bias of the spring 120) and pulls the rectangular protruding portion 136 out of the slot 204 of the mounting frame 200. This releases the latch 131. The latch is retained in the table 100 by the bias of the spring 120.

The table 100 can then be deployed by pulling down on the finger hold 116 of the lever 115 to rotate the table 100 downwards.

The table 100 is stowed by pushing the table 100 back up towards and into the mounting frame 200. By moving the table into the stowed position, the table is automatically secured, as follows:
Moving the table 100 into the stowed position moves the magnetic latch 131 in the table closer to the magnet 205 in the mounting frame 200. This attracts the latch 131 upwards and pulls it into the slot 204 of the mounting frame 200, against the bias of the spring 120 and gravity.

The table 100 is thereby secured in the stowed position by the magnetic force holding the latch 131 in the slot 204. With the latch 131 in the slot 204, the table 100 cannot be rotated downwards as the latch 131 abuts against the front side of the slot 204 and prevents the deploying rotational movement of the table 100.

Whilst the present invention has been described and illustrated with reference to particular embodiments, it will be appreciated by those of ordinary skill in the art that the invention lends itself to many different variations not specifically illustrated herein. By way of example only, certain possible variations will now be described.

In the above example the whole of the latch 131 is magnetic (made of steel). However, for the purposes of weight reduction, for example, only part of the latch, for example the rectangular protruding portion 136, may be magnetic.

In the above example, a rotating arc latch 131 and corresponding slot 204 are used to secure the table 100. Instead, many other ways could be employed. For example, a magnet could be used to move ball bearings to secure the table 100 or there could be a sliding latch.

In the above example, an attractive magnetic force is used to secure the table 100. Instead, a repulsive magnetic force may be used.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

## Claims

1. A securable furniture arrangement comprising:
- a first furniture item,
- a second furniture item, moveably mounted with respect to the first furniture item and moveable from a first position away from the first furniture item to a second position nearer the first furniture item, and
- a securing mechanism to secure the second furniture item in the second position, the securing mechanism comprising:
- a first magnetic element and a first securing member, both mounted to one of the first and second furniture items,
- a second securing member, moveably mounted to the other of the first and second furniture items, and moveable from a deactivated position with respect to that furniture item to an activated position with respect to that furniture item,
wherein, the second securing member comprises a second magnetic element, and wherein at least one of the first and second magnetic elements is a magnet, and
wherein, when the second furniture item is moved towards the second position, the second magnetic element is moved nearer the first magnetic element, causing, by means of the increased magnetic force, the second magnetic element to move the second securing member from the deactivated position to the activated position, and wherein, when the second securing member is in the activated position and the second furniture item is in the second position, the second securing member engages with the first securing member, thereby securing the second furniture item in the second position.

2. A securable furniture arrangement as claimed in claim 1, wherein the second securing member is restricted from moving further away from the activated position than the deactivated position and wherein, in the deactivated position, when the second furniture item is in the second position, the second securing member is sufficiently close to the first magnetic element to be moved by the magnetic force with the first magnetic element.

3. A securable furniture arrangement as claimed in any preceding claim, wherein the first magnetic element and first securing member are both mounted to the first furniture item and the second securing member is mounted to the second furniture item.

4. A securable furniture arrangement as claimed in any preceding claim, wherein the second securing member is rotatably mounted to its furniture item.

5. A securable furniture arrangement as claimed in any preceding claim, wherein the first and second magnetic elements are attracted to each other to move the second securing member towards the first securing member.

6. A securable furniture arrangement as claimed in any preceding claim, wherein the first and second securing members are corresponding female and male engagement members.

7. A securable furniture arrangement as claimed in claim 6, wherein, when the second securing member is in the activated position and the second furniture item is in the second position, the male securing member is engaged through the female securing member in a first direction and wherein relative movement between the male and female securing members would be in a substantially perpendicular direction to the first direction, were the second furniture item moved away from the second position.

8. A securable furniture arrangement as claimed in claim 6 or claim 7, wherein the first securing member is the female engagement member and the second securing member is the male securing member.

9. A securable furniture arrangement as claimed in any preceding claim, wherein the second securing member is biased towards the deactivated position, preferably by a spring.

10. A securable furniture arrangement as claimed in any preceding claim, wherein the arrangement comprises a release member connected to the second securing member, the release member being movable to a released position to disengage the second securing member from the first securing member, against the force of the magnet, to enable the second furniture item to be moved from the second position.

11. An aircraft interior of an aircraft comprising a securable furniture arrangement as claimed in any preceding claim, the securable furniture arrangement preferably comprising, as the first and second furniture elements, a stowage bin and lid, a galley fixture and galley, a door and a door frame or a stowable table and a mounting structure.

12. An aircraft seat module comprising a securable furniture arrangement as claimed in any of claims 1 to 10, the securable furniture arrangement comprising, as the first and second furniture elements, a stowable table and a mounting structure of the module.

13. An aircraft comprising the securable furniture arrangement, aircraft interior or aircraft seat module of any preceding claim.

14. A method of securing a securable furniture arrangement in an aircraft, the method comprising the steps of:
- moving a second furniture item nearer to a first furniture item,
- thus causing a first magnetic element, mounted to one of the first and second furniture items, to move nearer to a second magnetic element, mounted to the other of the first and second furniture items,
- thus causing a second securing member comprising the second magnetic element to move to an activated position,
- thus causing the second securing member to engage with a first securing member, mounted to the same furniture item as the first magnetic element, thereby securing the second furniture item.

15. A method of releasing a securable furniture arrangement in an aircraft, the method comprising the steps of:
- moving a first magnetic element, mounted to one of a first or second furniture item, to move away from a second magnetic element, mounted to the other of the first and second furniture items,
- thus causing a second securing member comprising the second magnetic element to move to an deactivated position,
- thus causing the second securing member to disengage from a first securing member, mounted to the same furniture item as the first magnetic element, thereby releasing the second furniture item, and
- moving the second furniture item away from the first furniture item.
